**Europäisches Patentamt**

**European Patent Office**

**Office européen des brevets**

(19)

(11) **EP 0 823 976 B1**

(12) **EUROPÄISCHE PATENTSCHRIFT**

(45) Veröffentlichungstag und Bekanntmachung des Hinweises auf die Patenterteilung:
**06.03.2002 Patentblatt 2002/10**

(51) Int Cl.[7]: **G02B 26/06**

(21) Anmeldenummer: **96914997.0**

(86) Internationale Anmeldenummer:
**PCT/EP96/01768**

(22) Anmeldetag: **26.04.1996**

(87) Internationale Veröffentlichungsnummer:
**WO 96/35137 (07.11.1996 Gazette 1996/49)**

(54) **VERFAHREN ZUR KOMPENSATION VON WELLENFRONTDEFORMATIONEN**

PROCESS FOR CORRECTING WAVE FRONT DEFORMATIONS

PROCEDE DE CORRECTION DE DEFORMATIONS DE FRONTS D'ONDES

(84) Benannte Vertragsstaaten:
**CH DE FR GB LI SE**

(30) Priorität: **02.05.1995 DE 19516017**

(43) Veröffentlichungstag der Anmeldung:
**18.02.1998 Patentblatt 1998/08**

(73) Patentinhaber: **Leica Geosystems AG**
**9435 Heerbrugg (CH)**

(72) Erfinder:
• **BRAUNECKER, Bernhard**
  **CH-9445 Rebstein (CH)**

• **BIBER, Massimo**
  **CH-9436 Balgach (CH)**

(74) Vertreter: **Stamer, Harald, Dipl,-Phys.**
**Postfach 26 04**
**35536 Wetzlar (DE)**

(56) Entgegenhaltungen:
**EP-A- 0 387 014        US-A- 4 572 616**
**US-A- 5 136 413        US-A- 5 392 119**

• **APPLIED OPTICS, Bd. 20, Nr. 2, 15.Januar 1981, NEW YORK US, Seiten 343-350, XP002015710 TAKUSO SATO ET AL: "Transmission-Type PVDF 2-D Optical Phase Modulator"**

**Beschreibung**

Die Erfindung betrifft ein Verfahren zur Kompensation von Wellenfrontdeformationen, die durch ein optisches System hervorgerufen werden und die mit Hilfe eines Wellenfrontmeßinstruments vermessen werden.

Unter einem optischen System sollen sowohl eine Anordnung von optischen Bauelementen zu einer Funktionseinheit als auch ein einzelnes optisches Bauelement verstanden werden.

Jedes optische System bewirkt gemäß seiner speziellen Funktion eine spezifische Veränderung einfallender Wellenfronten. Beispielsweise werden ebene Wellenfronten durch ein abbildendes optisches System in kugelförmige Wellenfronten umgewandelt. Jedoch gibt es Abweichungen von der idealen Form der Wellenfront beim Durchgang durch ein reales optisches System. Es kommt zu Wellenfrontdeformationen, deren Ursachen hauptsächlich in den nicht-idealen Verläufen der Oberflächen der einzelnen optischen Bauteile, die das optische System bilden, begründet liegen. Diese Fehler in den Oberflächen werden als Oberflächenpaßfehler oder einfach als Paßfehler bezeichnet. Daneben spielen auch Materialinhomogenitäten und die Verkittung der optischen Bauteile eine Rolle.

Die in den Wellenfronten hervorgerufenen Fehler setzen sich aus unterschiedlichen Fehleranteilen zusammen. Insbesondere rufen die durch Polierprozesse an optischen Bauteilen unvermeidbar erzeugten Oberflächenungenauigkeiten gestörte Wellenfronten hervor, deren Störung oder Deformation als 3 / A (B) gemäß DIN-Normblatt 3140, Teil 5, Oktober 1978, S. 3-4, Kennzahl für zulässige Paßfehler, klassifiziert wird. Dabei ist A ein Maß für den sphärischen Paßfehler, also der Abweichung der Oberflächenform von einem Probeglas, angegeben in der Anzahl von Newtonringen während B den Ovalpaßfehler, also den astigmatischen Anteil, ebenfalls in den gleichen Einheiten, beschreibt. Der verbleibende Rest der Wellenfrontdeformation ist bei den in Frage kommenden Herstellverfahren meist vernachlassigbar Mit Wellenfrontmeßinstrumenten, wie sie z.B. in DE 40 03 698 C2 oder in DE 40 03 699 C2 beschrieben sind, können die Wellenfrontdeformationen vermessen werden. Überschreiten die an einzelnen optischen Bauteilen oder an einer Gruppe von zusammengesetzten optischen Bauteilen gemessenen Wellenfrontdeformationen eine vorgegebene Toleranzgrenze, so werden diese Bauteile aus dem weiteren Produktionsprozeß herausgenommen und zur Nachbearbeitung zu einem vorhergehenden Prozeßschritt zurückgeführt. Die Nachbearbeitung erfolgt im allgemeinen nur an ganz bestimmten Stellen des optischen Bauteils, die aus der Messung der Wellenfrontdeformationen ermittelt wurden. Bei der Nachbearbeitung wird eine entsprechende Korrektur in das optische Bauteil einpoliert. Die Korrektur wirkt auf die Wellenfront als Gegenstörung, wodurch die ursprüngliche Wellenfrontdeformation bis zu einem gewissen Grad kompensiert wird.

Bei hohen Anforderungen an die Kompensation der Wellenfontdeformationen ergeben sich allerdings Schwierigkeiten. Werden Abweichungen von der gewünschten idealen Form der Wellenfront gefordert, die kleiner sind als die Wellenlängen des sichtbaren Lichts, so erhöht sich die Anzahl der optischen Bauteile, die diese Toleranzgrenze überschreiten und die deshalb aus dem Herstellungsablauf herausgenommen werden müssen. Wird jedoch die Rückweisungsrate zu groß, ist eine Rückführung der aussortierten optischen Bauteile zu einem vorangegangenen Prozeßschritt zum Zweck der Korrektur nicht mehr sinnvoll. Zum einen ist ein oftmaliges Eingreifen in den Fertigungsablauf sehr zeit- und kostenaufwendig und behindert eine flüssige Produktion. Zum anderen steigt das Risiko, durch einen nachträglichen Polierprozeß zusätzliche Feler zu erzeugen. Unter Umständen werden mehr neue Fehler erzeugt als ursprüngliche Fehler vorhanden waren. Da die ursprünglichen Fehler nicht mehr ausreichend eliminiert werden können, sind die Grenzen der Prozeßbeherrschung erreicht. Um deutliche Verbesserungen zu erzielen, müßte unter großem Aufwand ein grundlegend anderes Herstellungsverfahren entwickelt werden.

Aus der US 5 392 119 ist es bekannt, Phasenplatten zur Korrektur von Abbildungsfehlern in den Strahlengang von optischen Linsensystemen einzufügen. Die Oberflächenstruktur der Phasenplatten ist komplex und wird durch aufwendige Meß- und Rechenverfahren für jedes System individuell ermittelt.

Es ist daher die Aufgabe der Erfindung, die von einem optischen System hervorgerufenen Wellenfrontdeformationen mit einfachen Mitteln und mit geringem Zeitaufwand so weit zu eliminieren, daß die Toleranzgrenzen für die Wellenfrontdeformationen kleiner als die Wellenlängen des sichtbaren Lichts sind.

Diese Aufgabe wird erfindungsgemäß durch das in Anspruch 1 beschriebene Verfahren gelöst.

Vorteilhafte Weiterbildungen und Verbesserungen der Erfindung sind durch die Merkmale der Unteransprüche gekennzeichnet.

Zur Kompensation der Wellenfrontdeformationen werden erfindungsgemäß vorgefertigte optische Kompensationselemente verwendet. Solche Elemente sind vorzugsweise Planplatten, die mit Paßfehlern verschiedener Art und unterschiedlicher Stärke versehen sind. Die Paßfehler werden beispielsweise in die Planplatten einpoliert.

Erfahrungsgemäß verursachen die meisten optischen Bauteile oder Systeme aufgrund des Polierprozesses überwiegend sphärische und astigmatische Wellenfrontdeformationen. Dementsprechend können Planplatten mit sphärischen und zylindrischen Paßfehlern solche Wellenfrontdeformationen kompensieren. Dabei können sphärische und zylindrische Paßfehler zugleich in einer Planplatte eingearbeitet sein. Es ist allerdings herstellungstechnisch erheblich einfacher, in Planplatten ausschließlich sphärische Paßfehler und in andere Planplatten ausschließlich zylindrische Paßfehler einzupolieren. Je nach sammelnder oder zerstreuender Wirkung besitzen die Paßfehler positives oder negatives Vorzeichen. Die Angabe der Stärke eines Paßfehlers beinhaltet also die absolute Stärke mit einem Vorzeichen.

Aus einer Reihe dermaßen vorgefertigter Planplatten mit eingearbeiteten zylindrischen und / oder sphärischen Paßfehlem verschiedener Stärke werden zwei oder mehrere solcher Planplatten derart ausgewählt und gegenseitig und zum optischen System ausgerichtet, daß sie die vom optischen System erzeugten Wellenfrontdeformationen kompensieren. Dazu werden zunächst die Wellenfrontdeformationen mit Hilfe eines Wellenfrontmeßinstruments vermessen. Die gemessenen Wellenfrontdeformationen werden mathematisch vorzugsweise durch Zernikepolynome beschrieben. Dadurch sind die Koeffizienten der Zernikepolynome bestimmt. Andererseits lassen sich die in den Planplatten eingearbeiteten Paßfehler und auch die bei Kombination solcher Planplatten resultierenden Paßfehler ebenfalls durch Zernikepolynome beschreiben. Die Koeffizienten der Zernikepolynome lassen sich dabei durch die Stärke der Paßfehler und durch die gegenseitige Ausrichtung dieser Planplatten ausdrücken. Somit kann bei einer Auswahl zweier Planplatten mit Paßfehlern bekannter Stärke deren Ausrichtung zueinander und zum optischen System bestimmt werden, so daß sie in ihrer Gesamtwirkung die Wellenfrontdeformationen kompensieren können.

Folgendes Beispiel zeigt die Wirkung zweier Zylinderpassen. Werden bei einer einfallenden ebenen Welle zwei Zylinderpassen gleichen Vorzeichens und gleicher absoluter Stärke unter einem Winkel von 0° zueinander ausgerichtet, so ergibt sich eine rein zylindrische Wellenfront. Bei einer Ausrichtung der Zylinderpassen von 90° resultiert eine rein sphärische Wellenfront. Besitzen die Zylinderpassen unterschiedliche Vorzeichen bei gleicher absoluter Stärke, so bleibt die plane Wellenfront bei einer Ausrichtung der Zylinderpassen von 0° erhalten, während ein Winkel von 90° in diesem Fall eine rein zylindrische Wellenfront liefert. Für alle anderen Kreuzungswinkel ergeben sich entsprechende sphärische und zylindrische Anteile der Wellenfront. Das Verhältnis der sphärischen zu zylindrischen Anteile variiert kontinuierlich mit dem Kreuzungswinkel. Es genügen somit zwei Zylinderpassen geeigneter Stärke, um Wellenfrontdeformationen kompensieren zu können.

Konsequenterweise werden als optische Kompensationselemente eine Reihe von Planplatten mit eingearbeiteten positiven zylindrischen Paßfehlern und von Planplatten mit eingearbeiteten negativen zylindrischen Paßfehlem jeweils gleicher absoluter Stärke hergestellt und auf Lager gelegt. Während des Fertigungsprozesses von optischen Bauteilen oder Systemen werden die von diesen Systemen veränderten Wellenfronten mit dem Wellenfrontmeßinstrument vermessen. Aufgrund der gemessenen Wellenfrontdeformationen werden die geeigneten Kompensationselemente dem Lager entnommen und in der durch die Messung bestimmten Ausrichtung auf dem optischen Bauteil oder auf Elementen des optischen Systems aufgekittet oder aufgesprengt. Alternativ dazu können die optischen Kompensationselemente in der bestimmten Ausrichtung zueinander zunächst zu einem Kompensatormodul aufgebaut werden. Das Kompensatormodul wird dann seinerseits ausgerichtet in den Strahlengang des optischen Systems eingebracht.

Neben den genannten Zylinderpassen können als optische Kompensationselemente auch Planplatten mit eingearbeiteten sphärischen Paßfehlem verschiedener Stärke verwendet werden. Kompensationselemente mit sphärischen Paßfehlern sind leichter und kostengünstiger herzustellen als solche mit zylindrischen Paßfehlern. Allerdings reicht eine Reihe Kompensationselemente mit sphärischen Paßfehlern nicht aus, um die auftretenden Arten von Wellenfrontdeformationen kompensieren zu können. Es müssen auch Planplatten mit zylindrischem Paßfehler bereitgestellt werden, wobei jedoch Paßfehlerstärken nur eines Vorzeichens ausreichen. Zur Kompensation von Wellenfrontdeformationen sind in diesem Fall im allgemeinen drei optische Kompensationselemente notwendig.

Ein wesentlicher Vorteil des beschriebenen Verfahren ist es, daß mit einer nur geringen Anzahl von zwei oder drei optischen Kompensationselementen Wellenfrontdeformationen verschiedener Form und Stärke kompensiert werden können. Im Ablauf des Herstellungsprozesses von optischen Bauteilen und Systemen erfolgt die Kompensation der Wellenfrontdeformationen damit schnell und mit einfachen Mitteln. Es entfällt die Notwendigkeit, bereits gefertigte optische Bauteile oder Systeme, die nicht der Spezifikation entsprechen, in einen vorhergehenden Fertigungsprozeß zur Nacharbeit nochmals einzuschleusen.

Darüber hinaus hat sich ergeben, daß mit diesem Verfahren eine Kompensation von Wellenfrontdeformationen auf nur Bruchteile der optischen Wellenlängen gelingt. Damit ist eine wesentlich bessere Kompensation möglich als sie durch Nachbearbeitung des gefertigten optischen Systems erreicht werden kann. Die durch den Fertigungsprozeß bedingte Toleranzgrenze wird deutlich unterschritten und somit ein besseres Ergebnis erzielt

Im folgenden werden Ausführungsbeispiele der Erfindung anhand der Zeichnung näher erläutert. Es zeigt

Fig. 1a    eine schematische Darstellung zweier optischer Kompensationselemente zur Kompensation der durch ein Prisma hervorgerufenen Wellenfrontdeformationen,

Fig. 1b    ein Koordinatensystem zur Definition der Winkel,

Fig. 2    durch das Prisma nach Fig. 1 erzeugte und mit einem Wellenfrontmeßinstrument vermessene Wellenfrontdeformationen,

Fig. 3     die kompensierende Wirkung der optischen Kompensationselemente nach Fig. 1 auf die Wellenfrontdeformationen nach Fig. 2,

Fig. 4     durch willkürliches, gegenseitiges Verdrehen der optischen Kompensationselemente erzeugte Wellenfrontdeformationen

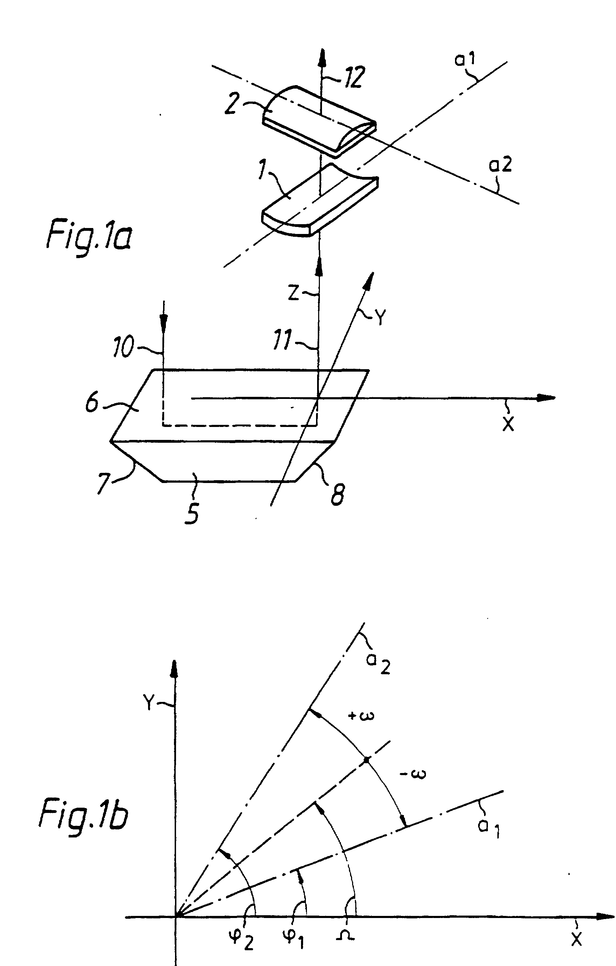

In Fig. 1a sind ein Prisma 5 und zwei optische Kompensationselemente 1 und 2 schematisch dargestellt. Ein Lichtstrahlenbündel 10 aus parallelen Lichtstrahlen fällt senkrecht auf die Oberfläche 6 des Prismas 5. Innerhalb des Prismas 5 wird das Lichtstrahlenbündel 10 an den Flächen 7 und 8 des Prismas 5 reflektiert. Es verläßt das Prisma 5 wieder durch die Oberfläche 6 und wird danach als Lichtstrahlenbündel 11 bezeichnet. Da die Flächen 7 und 8 des Prismas 5 einen Winkel von 45° zum einfallenden Lichtstrahlenbündel 10 bilden, wirkt das Prisma 5 als Retroreflektor, so daß das einfallende Lichtstrahlenbündel 10 und das aus dem Prisma 5 austretende Lichtstrahlenbündel 11 parallel verlaufen.

Im Wellenbild bedeuten die parallelen Lichtstrahlen des Lichtstrahlenbündels 10 eine ebene elektromagnetische Welle, deren Ausbreitungsrichtung senkrecht zu den ebenen Wellenfronten steht. Die ebenen Wellenfronten verlaufen somit parallel zur Oberfläche 6 des Prismas 5. Da die Oberflächen 6, 7 und 8 des Primas 5 aufgrund des Herstellungsprozesses örtliche Abweichungen von ideal ebenen Flächen aufweisen und da auch innerhalb des Prismas 5 beispielsweise den Brechungsindex beeinflussende Materialinhomogenitäten auftreten können, tritt die elektromagnetische Welle mit entsprechenden Wellenfrontdeformationen aus dem Prisma 5 aus. Die Wellenfrontdeformationen des austretenden Lichtstrahlenbündels 11 werden mit Hilfe eines nicht dargestellten Wellenfrontmeßinstruments vermessen. An Hand der Meßergebnisse werden geeignete optische Kompensationselemente 1 und 2 aus einer Reihe vorgefertigter optischer Kompensationselemente ausgewählt und die Ausrichtung der optischen Kompensationselemente 1 und 2 zueinander und ebenso zu den Koordinaten x und y des Prismas 5 bestimmt. Die Ausrichtungen sind durch die Winkel $\varphi_1$ und $\varphi_2$ gegeben, die die Achsen a1 und a2 der Kompensationselemente 1 und 2 zur x-Achse in der x-y-Ebene des Koordinatensystems x, y, z des Primas 5 bilden (Fig. 1). Die optischen Kompensationselemente 1 und 2 sind als negative und positive Zylinderpassen dargestellt. Die durch das Prisma 5 hervorgerufenen Wellenfrontdeformationen des Lichtstrahlenbündels 11 werden durch die optischen Kompensationselemente 1 und 2 kompensiert, so daß das daraus hervorgehende Lichtstrahlenbündel 12 wieder ebene Wellenfronten enthält.

Zur mathematischen Beschreibung der gemessenen Wellenfrontdeformationen werden die allgemein bekannten Zemikepolynome (BORN, Max, WOLF, Emil: Principles of Optics, 6th Edition Oxford, New York: Pergamon Press, 1980, S. 464) bevorzugt. Die gemessene Wellenfront wird nach den Zemikepolynomen zerlegt, wodurch die Koeffizienten der Zernikepolynome bestimmt sind. Andererseits können die Koeffizienten der Zernikepolynome für die in Fig. 1a gezeigten Zylinderpassen 1, 2 folgendermaßen als Gleichungen dargestellt werden.

Nach Passieren der Zylinderpasse 1 gilt für die Phase $W_1$ der Wellenfront

$$W_1 = C_1 + C_1 \cdot \{2\rho^2 - 1\} - 2 C_1 \rho^2 \cdot \{\cos 2\alpha \cos 2\varphi_1 + \sin 2\alpha \sin 2\varphi_1\}$$

mit

$$C_1 = (n - 1) \, \lambda \,/8 \cdot A_1$$

Hierbei bedeuten $\varphi_1$ der Azimutwinkel zur x-Achse, $\rho$ und $\alpha$ die Polarkoordinaten in der x-y-Ebene, n der Brechungsindex der Zylinderpasse 1, $\lambda$ die Lichtwellenlänge und $A_1$ die Anzahl der Newton'schen Ringe gemäß der Klassifizierung nach DIN 3140, die ein Maß der Stärke des Paßfehlers darstellt.

Für die Zylinderpasse 2 gilt analog

$$W_2 = C_2 + C_2 \cdot \{2\rho^2 - 1\} - 2 C_2 \rho^2 \cdot \{\cos 2\alpha \cos 2\varphi_2 + \sin 2\alpha \sin 2\varphi_2\}$$

mit

$$C_2 = (n - 1) \, \lambda/8 \cdot A_2$$

Es ist zweckmäßig, die Azimutwinkel $\varphi_1$, $\varphi_2$ beider Zylinderachsen a1, a2 neu zu definieren:

$$\Omega = (\varphi_1 + \varphi_2)/2$$

$$\omega = (\varphi_2 - \varphi_1)/2$$

Diese Winkelbeziehungen sind in Fig. 1b anschaulich dargestellt.

Bei Kombination der Zylinderpassen 1 und 2 ergibt sich für die Phase W der Wellenfront

$$W = W_1 + W_2 =$$

$$= D_1 + D_3 \cdot Z_3 + D_4 \cdot Z_4 + D_5 \cdot Z_5$$

mit

$$D_1 = D_3 = (n - 1) \cdot \lambda/8 \cdot \{A_1 + A_2\}$$

$$D_4 = - (n - 1) \cdot \lambda/4 \cdot \{A_1 \cdot \cos2(\Omega - \omega) + A_2 \cdot \cos2(\Omega + \omega)\},$$

$$D_5 = - (n - 1) \cdot \lambda/4 \cdot \{A_1 \cdot \sin2(\Omega - \omega) + A_2 \cdot \sin2(\Omega + \omega)\} \text{ und}$$

den

Zemikepolynomen $Z_3 = 2\rho^2 - 1$; $Z_4 = \rho^2 \cos2\alpha$, $Z_5 = \rho^2 \sin 2\alpha$

Aus den Gleichungen für die Koeffizienten $D_1$, $D_3$, $D_4$ und $D_5$ der Zemikepolynome der gekreuzten Zylinderpassen 1, 2 lassen sich mit den aus der gemessenen Wellenfrontdeformation ermittelten Werten der Koeffizienten $D_1$, $D_3$, $D_4$ und $D_5$ bei bekannten Paßfehlerstärken $A_1$ und $A_2$ der Zylinderpassen 1, 2 deren Kreuzungswinkel $\omega$ und Einbauwinkel $\Omega$ bestimmen.

Somit lassen sich aus einer Reihe vorgefertigter und mit unterschiedlichen Paßfehlem versehener optischer Kompensationselemente 1, 2 wenigstens zwei Kompensationselemente 1, 2 derart auswählen, daß die Winkel zum Koordinatensystem des Prismas 5 leicht einstellbar sind. Es versteht sich von selbst, daß in einem sehr selten auftretenden Fall, bei dem ein optisches System Wellenfrontdeformationen nur eines einzigen Typs erzeugt, auch nur ein einziges optisches Kompensationselement entsprechenden Typs und entsprechender Stärke zur Kompensation des Fehlers in der Wellenfront notwendig ist.

Ein optisches System besteht im allgemeinen nicht nur aus einem Prisma wie das beispielhaft dargestellte Prisma 5. Es kann aus weiteren nicht-abbildenden optischen Funktionselementen und / oder abbildenden optischen Funktionselementen wie Linsen, gekrümmte Spiegel, Hologramme etc. zusammengesetzt sein. Alle Funktionselemente eines solchen optischen Systems tragen zu Deformationen der in das optische System einfallenden Wellenfronten bei.

Selbstverständlich werden auch die nach dem Durchgang der optischen Strahlung durch ein solchermaßen zusammengesetztes optisches System insgesamt erzeugten Wellenfrontdeformationen nach dem beschriebenen erfindungsgemäßen Verfahren kompensiert.

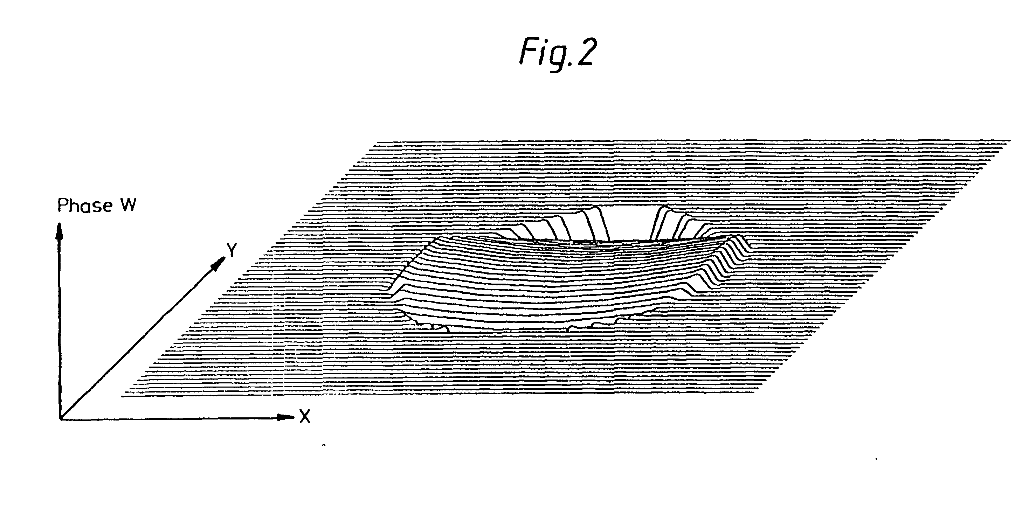

Fig. 2 zeigt die vom Prisma 5 der Fig. 1 erzeugte und mit einem Wellenfrontmeßgerät vermessene Wellenfront. Es ist die Phase W der Wellenfront in Abhängigkeit des Ortes in der x-y-Ebene aufgetragen. In der Mitte des Strahlenbündels 11 sind die Phasen W der Wellenfront gegenüber der eingezeichneten Ebene nacheilend, während sie am linken und insbesondere am rechten Rand des Strahlenbündels 11 vorauseilend sind.

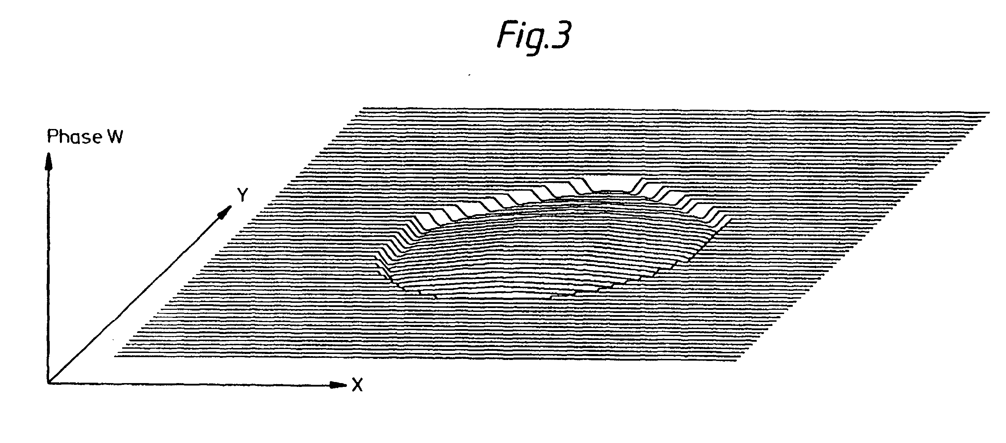

Die Wirkung der optischen Kompensationselemente 1, 2 auf die in Fig. 2 gezeigten Wellenfrontdeformationen ist in Fig. 3 zu sehen. Die Phase W der Wellenfront ist nach dem Durchgang des Lichts durch die optischen Kompensationselemente 1, 2 über den gesamten Querschnitt des Strahlenbündels 12 nahezu konstant. Die Abweichungen von einer idealen Ebene betragen nur Bruchteile der sichtbaren Lichtwellenlänge und liegen somit innerhalb der geforderten Toleranzgrenze.

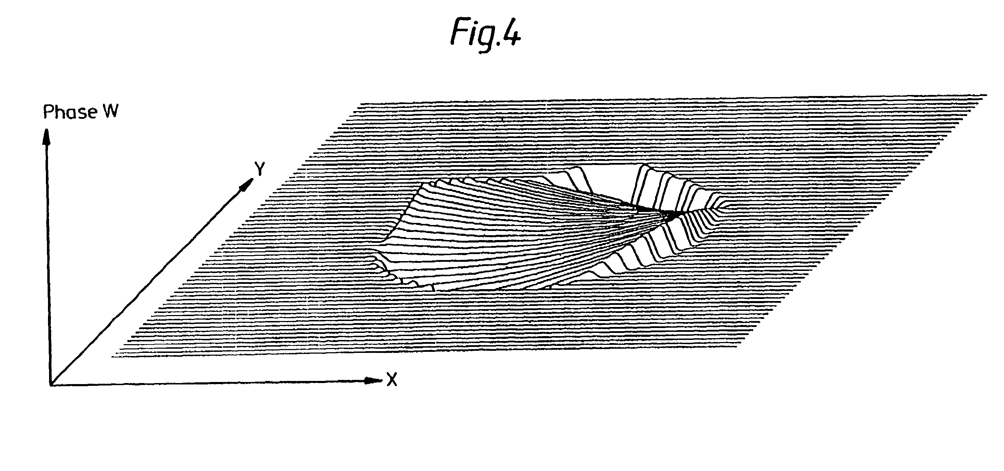

Fig. 4 zeigt Wellenfrontdeformationen bei einer willkürlichen Verdrehung der optischen Kompensationselemente 1 und 2 aus ihrer optimalen Lage gemäß Fig. 3.

**Patentansprüche**

1. Verfahren zur Kompensation von durch ein optisches System (5) hervorgerufenen Wellenfrontdeformationen mit Hilfe von mindestens zwei in den Strahlengang des optischen Systems eingebrachten optischen Kompensationselementen (1, 2), in dem die Wellenfrontdeformationen mit Hilfe eines Wellenfrontmeßinstruments vermessen wird, und die Kompensationselemente (1, 2) in ihrer Ausrichtung zueinander und zum optischen System (5) so eingestellt werden, daß eine Kompensation der Wellenfrontdeformation erreicht wird, **dadurch gekennzeichnet, daß** die zu kompensierenden Wellenfrontdeformationen überwiegend sphärisch und astigmatisch sind, und daß in Abhängigkeit von der gemessenen Wellenfrontdeformation die Kompensationselemente (1, 2) aus einer Reihe vorgefertigter, mit unterschiedlichen, ausschließlich zylindrischen und / oder sphärischen Paßfehlern und Paßfehlerstärken versehener optischer Bauteile ausgewählt werden.

2. Verfahren nach Anspruch 1, **dadurch gekennzeichnet, daß** die Reihe vorgefertigter optischer Kompensationselemente (1,2) durch Planplatten mit eingearbeiteten zylindrischen und / oder sphärischen Paßfehlern verschiedener Stärke dargestellt wird.

3. Verfahren nach Anspruch 2, **dadurch gekennzeichnet, daß** die Reihe vorgefertigter optischer Kompensationselemente (1,2) durch eine Reihe Planplatten mit eingearbeiteten positiven zylindrischen Paßfehlem und eine Reihe Planplatten mit eingearbeiteten negativen zylindrischen Paßfehlern jeweils gleicher absoluter Stärke dargestellt wird.

4. Verfahren nach Anspruch 2, **dadurch gekennzeichnet, daß** die Reihe vorgefertigter optischer Kompensationselemente (1,2) durch eine Reihe von Planplatten mit eingearbeiteten sphärischen Paßfehlem verschiedener Stärke und durch eine Reihe Planplatten mit zylindrischen Paßfehlem verschiedener Stärke aber mit einheitlichem Vorzeichen dargestellt wird.

5. Verfahren nach einem der vorherigen Ansprüche, **dadurch gekennzeichnet, daß** die zur Korrektur der Wellenfrontdeformation ausgewählten und zueinander und zum optischen System (5) ausgerichteten einzelnen optischen Kompensationselemente (1,2) auf Elementen des optischen Systems aufgekittet oder angesprengt werden.

6. Verfahren nach einem der Ansprüche 1 bis 4, **dadurch gekennzeichnet, daß** die zur Korrektur der Wellenfrontdeformation ausgewählten und zueinander ausgerichteten optischen Kompensationselemente (1,2) zu einem Kompensatormodul aufgebaut werden und daß das zum optischen System (5) ausgerichtete Kompensatormodul in den Strahlengang des optischen Systems (5) eingebracht wird.

7. Verfahren nach einem der vorherigen Ansprüche, **dadurch gekennzeichnet, daß** die Ausrichtung der Kompensationselemente (1,2) direkt nach Winkelgrößen erfolgt, die aus dem Verlauf der Wellenfrontdeformation berechnet wurden.

**Claims**

1. Process for correcting wave front deformations, caused by an optical system (5), with the aid of at least two optical correction elements (1, 2) introduced into the beam path of the optical system, in which the wave front deformations are measured with the aid of a wave front measuring instrument, and the correction elements (1, 2) are adjusted in their orientation relative to one another and to the optical system (5) so that correction of the wave front deformation is achieved, **characterized in that** the wave front deformations to be corrected are predominantly spherical and astigmatic, and that, depending on the measured wave front deformation, the correction elements (1, 2) are selected from a series of prefabricated optical components provided with different, exclusively cylindrical and/or spherical form errors and form error magnitudes.

2. Process according to Claim 1, **characterized in that** the series of prefabricated optical correction elements (1, 2) is represented by parallel plates having incorporated cylindrical and/or spherical form errors of different magnitudes.

3. Process according to Claim 2, **characterized in that** the series of prefabricated optical correction elements (1, 2) is represented by a series of parallel plates having incorporated positive cylindrical form errors and a series of parallel plates having incorporated negative cylindrical form errors, in each case of identical absolute magnitude.

4. Process according to Claim 2, **characterized in that** the series of prefabricated optical correction elements (1, 2) is represented by a series of parallel plates having incorporated spherical form errors of different magnitudes and by a series of parallel plates having cylindrical form errors of different magnitudes but with the same sign.

5. Process according to any of the preceding Claims, **characterized in that** the individual optical correction elements (1, 2) selected for correction of the wave front deformation and oriented relative to one another and to the optical system (5) are cemented or snapped onto the elements of the optical system.

6. Process according to any of Claims 1 to 4, **characterized in that** the optical correction elements (1, 2) selected for correction of the wave front deformation and oriented relative to one another are assembled to form a compensator module, and that the compensator module oriented relative to the optical system (5) is introduced into the beam path of the optical system (5).

7. Process according to any of the preceding Claims, **characterized in that** the orientation of the correction elements (1, 2) is effected directly according to angular magnitudes which were calculated from the curve of the wave front deformation.

**Revendications**

1. Procédé de compensation de déformations de fronts d'ondes provoquées par un système optique (5), à l'aide d'au moins deux éléments de compensation (1, 2) optiques introduits dans le trajet des rayons du système optique, dans lequel les déformations des fronts d'ondes sont mesurées à l'aide d'un instrument de mesure de front d'ondes et les éléments de compensation (1, 2) sont réglés, quant à leur orientation mutuelle et par rapport au système optique (5), de manière à obtenir une compensation de la déformation de front d'ondes,
   **caractérisé en ce que**

   les déformations de fronts d'ondes à compenser sont majoritairement de nature sphérique et astigmatique, et **en ce que**
   en fonction de la déformation de front d'ondes mesurée, on sélectionne les éléments de compensation (1, 2) à partir d'une gamme de composants préfabriqués, dotés de défauts d'adaptation, exclusivement cylindriques et/ou sphériques, différents et d'intensités d'adaptation différentes.

2. Procédé selon la revendication 1, **caractérisé en ce que** la gamme d'éléments de compensation (1, 2) optiques préfabriqués est représentée par des panneaux plans ayant des défauts d'adaptation cylindriques et/ou sphériques obtenus par usinage avec enlèvement de matière, ces défauts d'adaptation étant d'intensité différente.

3. Procédé selon la revendication 2, **caractérisé en ce que** la gamme d'éléments de compensation (1, 2) optiques préfabriqués est constituée par une série de panneaux plans ayant des défauts d'adaptation cylindriques positifs, obtenus par usinage, et une série de panneaux plans ayant des défauts d'adaptation cylindriques négatifs, obtenus par usinage, chaque fois ayant la même ampleur absolue.

4. Procédé selon la revendication 2, **caractérisé en ce que** la gamme d'éléments de compensation (1, 2) optiques préfabriqués est constituée par une série de panneaux plans ayant des défauts d'adaptation sphériques obtenus par usinage, d'ampleur différente, et par une série de panneaux plans avec des défauts d'adaptation cylindrique d'ampleur différente mais de signe unitaire.

5. Procédé selon l'une des revendications précédentes, **caractérisé en ce que** les différents éléments de compensation (1, 2) optiques, sélectionnés pour effectuer la correction de la déformation de fronts d'ondes et orientés les uns par rapport aux autres et par rapport au système optique (5), sont montés, par masticage ou accolage, sur des éléments du système optique.

6. Procédé selon l'une des revendications 1 à 4, **caractérisé en ce que** les éléments de compensation (1, 2) optiques, sélectionnés pour la correction de la déformation de fronts d'ondes et orientés les uns par rapport aux autres, sont constitués en un module compensateur, et **en ce que** le module compensateur, orienté par rapport au système optique (5), est introduit dans le trajet des rayons du système optique (5).

7. Procédé selon l'une des revendications précédentes, **caractérisé en ce que** l'orientation des éléments de compensation (1, 2) s'effectue directement selon les valeurs angulaires issues du calcul, effectué d'après l'allure de la déformation de fronts d'ondes.

Fig.1a

Fig.1b

Fig.2

*Fig.3*

EP 0 823 976 B1

Fig.4